# EUROPEAN PATENT APPLICATION

(11) **EP 4 503 247 A1**
(43) Date of publication of application: **05.02.2025**
(21) Application number: 24020242.4
(22) Date of filing: 24.07.2024
(51) Int. Cl.: H01M 10/06, H01M 10/12, H01M 10/16, H01M 50/114

(54) **A LEAD-ACID BATTERY CELL FOR LABORATORY ACTIVITIES**

(30) Priority: 01.08.2023 IT 202300016344
(71) Applicant: FIAMM Energy Technology S.p.A., 36075 Montecchio Maggiore (VI) (IT); Università degli Studi di Padova, 35122 Padova (IT)
(72) Inventor: Giorgia, Daniel, 36075 Montecchio Maggiore (IT); Trapula, Roberto, 36075 Montecchio Maggiore (IT); Negretto, Alessandro, 36075 Montecchio Maggiore (IT); Cazzanti, Silvia, 36075 Montecchio Maggiore (IT); Aliberti, Roberto, 36075 Montecchio Maggiore (IT); Hippoliti, Raimondo, 36075 Montecchio Maggiore (IT); Durante, Christian, 35122 Padova (IT); Cattelan, Marco, 35122 Padova (IT); Mazzuccato, Marco, 35122 Padova (IT)
(74) Representative: Lecce, Giovanni

(57) **Abstract**

A lead-acid battery cell (100) with AGM technology for laboratory activities, comprising:
- plates (P), flat for *automotive* and industrial applications, obtained by grid manufacturing technologies such as gravity fusion, continuous fusion, expanded and punched: positive (P+) and negative (P-);
- fiberglass separators (M), wrapped around the positive (P+) plates;
- electrolytic solution,
the cell is assemblable and re-usable, being formed by
- two thermoplastic material compartments (10, 20) for housing the plates (P);
- a rubber seal (30), interposed between said compartments (10, 20);
- conventional fixing and sealing means (40);
- terminals (50, 52), of fused Pb-Sn alloy, welded to the group of plates (P) and having free threaded ends (50a, 52a), respectively;
- thermoplastic material connectors (60).

Said cell provides a precision pressure manometer for pressure monitoring and a rubber (elastomer) septum for gas capture and analysis.

## Description

The present invention relates to a lead-acid battery cell for laboratory activities.

More particularly, the present invention relates to a lead-acid battery cell that is hermetically sealed and re-usable multiple times for testing and setting during Research and Development (R&D) activities.

More particularly yet, the present invention relates to a single 2V cell with AGM (*Absorbed Glass Mat*)) technology, easily assembled and hermetically sealed, made to be tested and set up in the laboratory. As it is known, AGM technology uses the principle of recombination: using a special microporous fiberglass separator, impregnated with a controlled amount of electrolyte, the oxygen, which has been released from the positive plate as a result of water dissociation, can migrate to the negative plate during the charging phase, from which it is fixed and then recombines with hydrogen, restoring the water that had dissociated. Thus, a closed electrochemical cycle is established, in principle, with no gas emission to the outside and no water consumption.

Lead-acid batteries of the oxygen recombinant and hermetically sealed types are described, for example, in US5,227,260A, which discloses a technique of constructing a modular frame, preferably including two nominal 2V voltage cells for each frame, suitable for allowing the construction of a wide variety of battery designs and capacities, avoiding the need for expensive housing, tooling and part inventory. Each cell preferably consists of a heat-shrinkable polypropylene pouch needed as a container to keep the different components aligned. The elements contained within the pouch include a separator sheet, folded around a positive plate, on either side of which is placed an oxygen-absorbing negative plate. The preferred separator consists of about 95 % fiberglass and about 5 % polypropylene fibers. The battery is protected from oxygen and moisture by applying both a final tri-layer material film to the bottom and sides, said final film being sealed to the frame, and a multicomponent sealing mixture that is inserted around the plate flags. Another feature of the invention is the improvement of battery efficiency through the application of uniform pressure between the different elements by using plates, for example, made of steel or aluminum.

The research of materials, structures and formulations used in lead-acid batteries requires results to be tested to verify the outcome, through repeated laboratory testing. Thus, the need for numerous prototypes to be produced for trial and testing emerges, increasing the already high costs of the Research and Development (R&D) department.

The cases used for testing are different according to the lead-acid battery model being developed and require continuous experimental use.

The prior art provides a series of lead-acid battery cell cases for laboratory activities that promote hermeticity and the capability to keep plates in compression by the conformation of the cases. CN2443493Y discloses a 2V lead-acid storage battery in which the polar plate grid is a lead mesh woven from coaxially extruded wires; the plates, positive and negative, are formed by positive and negative lead paste on the grid, respectively. The separators are stacked horizontally and pressed together as one; then, inserted vertically into the battery case, and the welding columns of the plates, positive and negative, are respectively welded together by collector bars. CN105226207B discloses an experimental 2V lead-acid battery case in which the shape of the lower part of the case corresponds to the shape of the securely assembled cell assembly; the upper part is wider than the middle and lower parts, and one end, fitted with a groove, protrudes from the upper surface and is arranged to couple with an elevation formed on the edge of the cap, operating as a sealing joint. A plurality of reinforcing ribs is formed on the outer wall of the case, which protrude evenly from the front-end surface and the back-end surface. The outer edge of the bottom surface of the case is also enclosed by a series of reinforcing ribs. On the upper surface of the cap, holes are provided laterally to house the positive and negative terminals and, centrally, a hole for the drain cap is provided. A silicone seal is placed in the groove that presses on the cap seal joint, which is secured by a screw through a through-hole. A concave plate is located in each of the terminal holes. After placing the terminals in the holes, a rubber sealing ring is installed on the concave plate, wrapping the waterproof tape around it, and the terminal is used. The case thus sealed prevents acid from rising on the terminals when performing performance tests.

JPS61116753A is intended to prevent the electrolyte leakage to the outside and it discloses a sealed storage battery in which a flat electrode plate assembly - composed of a positive electrode plate, a negative electrode plate, and a separator - is surrounded by an outer cap consisting of a synthetic resin film, resistant to the electrolyte solution, and with thermal adhesion properties. The film around the electrode plate assembly is thermally welded to form a sealing portion, and the plate conductors penetrate through part of the sealing portion, being impermeable to liquids and air, and extend to the outside.

US4,605,605A discloses a cylindrical-shaped lead-acid battery with a polyvinylchloride case, whose positive terminal is made of a lead alloy with a tin content of 0.1 to 1.5 % by weight, with the outer structure ribbed or grooved. Such a structure of the positive terminal allows good grip and long life of the seals attached to it, so that a seal is achieved.

Purpose of the present invention is to provide a lead-acid battery cell for laboratory activities that is not only hermetically sealed and capable to keep the plates in compression, but also easily assembled and re-usable once the life cycle of the plates is over.

More particularly, purpose of the present invention is to provide a lead-acid battery cell for laboratory activities that can be assembled by simple steps.

Further purpose of the present invention is to provide components for the assembly of a 2V laboratory cell with AGM technology, arranged to be re-used once the life cycle of cell is over.

Not least purpose yet of the present invention is to provide a lead-acid battery cell for laboratory activities that meets the requirements at the experimental stage.

These and other purposes are achieved by the lead-acid battery cell for laboratory activities of the present invention in accordance with the main claim.

The constructional and functional characteristics of the lead-acid battery cell for laboratory activities of the present invention may be better understood from the description that follows, in which reference is made to the attached drawings, which represent a preferred and non-limiting embodiment, and in which:
- FIG. 1 shows a perspective view of the components of the AGM battery cell for laboratory activities of the invention;
- FIG. 2 shows a perspective view of the assembled cell, the components of which are shown in FIG. 1;
- FIG. 3 shows the detail of the parts constituting one of the connectors of cell shown to in FIGG. 1 and 2.

The lead-acid battery cell 100 for laboratory activities of the present invention, comprises:
- plates P: positive P+ and negative P-;
- fiberglass separators M;
- two thermoplastic material compartments 10, 20 for housing the plates P;
- a rubber seal 30;
- conventional fixing and sealing means 40;
- Pb-Sn (Lead-Tin) terminals 50, 52, welded to the group of plates P, respectively;
- thermoplastic material connectors 60,
   and the cell 100 provides
- a precision pressure manometer for pressure monitoring (not shown);
- a rubber (elastomer) septum (not shown) for gas capture and analysis.

For example, the pressure manometer is of the mechanical tubular spring (or Bourdon) type, preferably made of stainless steel (e.g., 1.4404 or 316L), usable in over-pressure or under-pressure conditions, and has a 1/4B type connection with a hydraulic type thread (GAS or NPT).

For example, the elastomeric septum, size 14/20, has self-sealing and chemical and mechanical resistance properties to ensure the hermeticity of cell 100.

The lead-acid battery cell for laboratory activities of the invention can have a configuration similar to that found on *full battery,* getting to have ten positive P+ plates for each cell.

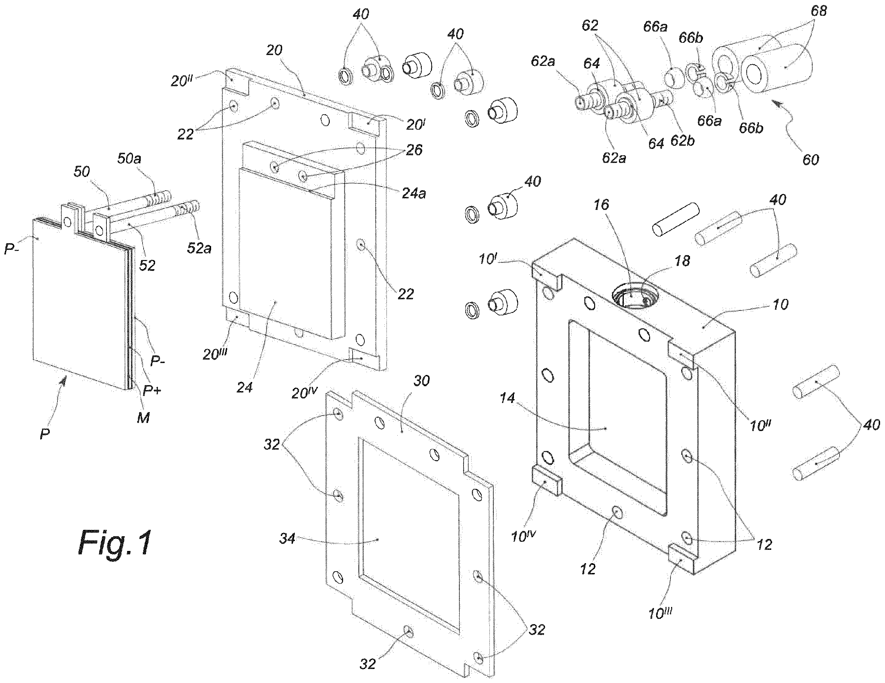

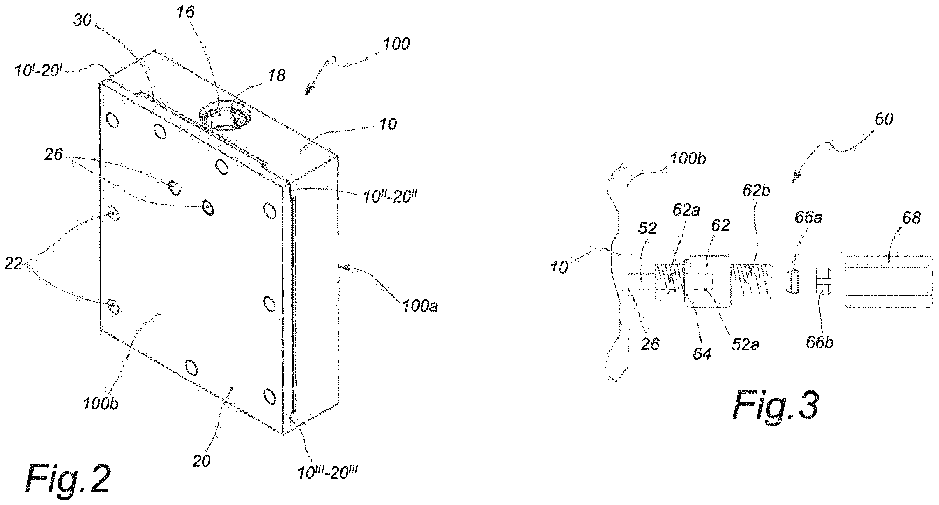

With reference to an exemplary embodiment, particularly shown in FIGG. 1 and 2, the lead-acid battery cell 100 with AGM technology for laboratory activities, comprises:
- at least two negative P- plates and at least one positive P+ plate, or vice versa;
- a fiberglass separator M;
- two compartments 10, 20 for housing of the plates P. The compartments are made of thermoplastic material, such as. PVC, ABS, Teflon, PVDF e PP;
- a rubber seal 30, preferably, but not limited to, Viton^{®} (very resistant elastomer);
- conventional fixing and sealing means 40;
- two Pb-Sn (Lead-Tin) terminals 50, 52, welded to the group of plates P and provided with free threaded ends 50a, 52a, respectively;
- two thermoplastic material connectors 60, preferably, but not limited to, PVDF (Polyvinylidenefluoride) or PP (polypropylene).

More particularly, the plates P are of the flat type for *automotive* and industrial application, obtained by grid manufacturing technologies such as gravity fusion, continuous fusion, expanded and punched.

In the embodiment shown in FIGG. 1 and 2, the plates P are rectangular and "flag-types", i.e. with an upper protrusion, have dimensions of height between 93-141 mm, a width between 74-150 mm and a thickness between 0.85-1.7 mm and are at least two negative plates (P-) and at least one positive plate (P+).

The fiberglass separator M is a standard type, the same as the type used in production, except for its thickness.

Particularly, in view of experimental use, in cell 100 the separator M has a thickness such that compression is preferably between 25 and 35 kPa.

Such compression is usually achieved in production AGM batteries and is applied evenly over the entire surface of the plates P according to the particular geometry of cell 100, described below.

With specific reference to FIG. 1, two compartments 10, 20 for housing the plates P are preferably made of PVC and have internal dimensions calculated in accordance with, both the type of plates P chosen and described above, and to achieve a ratio of electrolyte volume to PAM (*Positive Active Mass*), similar to that of a battery in production.

The compartment 10, preferably rectangular in shape, has:
- perimeter-distributed holes 12;
- a central cavity 14 for housing the plates P, preferably - but not limited to - formed in a rectangular shape, with height between 93-141 mm, width between 74-150 mm and thickness between 0.85-1.7 mm;
- an upper threaded hole 16, preferably of the M18 type, suitable for filling cell 100 and adapted to accommodate, during the resting phase of cell 100, a conventional AGM battery cap (not shown) and, during the testing phase of cell 100, the elastomeric septum for gas capture and analysis (not shown);

- a front hole 18 for gas relief,
- protrusions 10^{I}, 10^{II}, 10^{III}, 10^{IV} obtained at the four vertices.

The compartment 20, preferably rectangular in shape, has:
- perimeter-distributed holes 22;
- a protruding portion 24 for housing the plates P, preferably - but not limited to - formed in a rectangular shape, with height 100 mm, width 79,7 mm and thickness 12,8 mm.
- a prominence 24a, obtained in said protruding portion 24, preferably but not limited to, with height 12,9 mm, width 79,7 mm and thickness 11,8 mm;
- two front threaded holes 26, preferably G1/8" type;
- recesses 20^{I}, 20^{II}, 20^{III}, 20^{IV} obtained at the four vertices.

The perimeter-distributed holes 22 of the compartment 20, are aligned with the perimeter-distributed holes 12 of the compartment 10.

The protruding portion 24 of the compartment 20 is complementary to the central cavity 14 of the compartment 10.

The prominence 24a, obtained in protruding portion 24, is arranged for the passage of the two terminals 50, 52 through said two front threaded holes 26.

The protrusions 10^{I}, 10^{II}, 10^{III}, 10^{IV} obtained at the four vertices of the compartment 10 are matched in recesses 20^{I}, 20^{II}, 20^{III}, 20^{IV} obtained at the four vertices of the compartment 20.

To provide sealing for cell 100 and prevent acid leakage, the seal 30 is interposed between the two compartments 10, 20; the seal 30, which has a tendentially rectangular in shape, has
- perimeter-distributed holes 32;
- a central through cavity 34, preferably of rectangular shape;
- absence of the four vertices.

The perimeter-distributed holes 32 of the seal 30 are aligned with the perimeter-distributed holes 12 of the compartment 10 and with the perimeter-distributed holes 22 of the compartment 20.

The central through cavity 34 of the seal 30 is complementary to the central cavity 14 of the compartment 10 and to the protruding portion 24 of the compartment 20.

The two compartments 10, 20, with the seal 30 interposed, are easily assembled using conventional fixing and sealing means 40, such as screws, washers and nuts, to form the lead-acid battery cell 100 for laboratory activities of the invention.

Said fixing means 40 find access from the back face 100a of cell 100, at the holes 12 of the compartment 10, pass through the holes 32 of the seal 30 and the holes 22 of the compartment 20, and they are clamped, by corresponding sealing means 40, at the opposite end, on the front face 100b of cell 100.

The clamping of the means 40, preferably performed with a dynamometric tool with a closing torque that may vary depending on the material chosen for the compartments and the seal, is performed with the same force, so as not to result in areas of reduced and/or excessive closing and/or internal compression on the plates P.

The cell 100 used for laboratory testing activities of the invention provides for mounting the terminals 50, 52 horizontally. The terminals 50, 52 have preferably round profiles made of fused Pb-Sn (Lead-Tin) alloy, with a length of 70 mm, a diameter of 6 mm, and an M6 thread with a length of about 15-20 mm, (necessary to enable the feasibility of electrical tests).

The unthreaded ends of the terminals 50, 52 are welded to the flags of the at least two plates P, one negative P- and one positive P+, while the opposite free threaded ends 50a, 52a of the terminals 50, 52 emerge from the front face 100b of cell 100 through the front holes 26, obtained at the prominence 24a of the projecting part 24 of the compartment 20.

With reference now particularly to FIG. 3, the connectors 60, made of PVDF or PP, each comprises the following:
- a connector body 62 with opposing threaded ends 62a, 62b, having a size proportional to the flag of the plates P and threads of the type of any of the known (G, M o NPT);
- a rubber seal 64, preferably Viton^{®}, duly accommodated at the threaded end 62a of the connector body 62;
- a sealing ring 66a;
- a cutting ring 66b;
- a locking nut 68.

The sealing of the cell 100 in the proximity of the front holes 26 of the compartment 20 is made possible by the use of the two connectors 60: in particular, the rubber seal 64, has the function of ensuring good sealing between cell 100 and connectors 60.

### Assembly steps of the cell

The assembly of cell 100, in the exemplary embodiment, consisting of at least two negative P- plates and at least one positive P+ plate, provides the following steps:
A) drilling of the flags of the plates P to allow the passage of the Pb-Sn (Lead-Tin) alloy round profiles, which define the two terminals 50, 52;
B) a first welding between the unthreaded end of the first terminal 50 performed on the flag of the first of at least two negative P- plates;
C) a second welding between the unthreaded end of the second terminal 52 performed on the flag of the at least one positive P+ plate;
D) wrapping of the at least one positive P+ plate in the separator M and coupling the same with the first of the at least two negative P- plates;
E) overlapping the second of the at least two negative P- plates plates on top of the just-formed group and welding it to the first terminal 50, to obtain a profile of the block of plates P of the type: 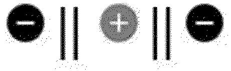
F) positioning the block of plates P inside the central cavity 14 of the compartment 10, with the free ends 50a, 52a of the terminals facing upwards;
G) screwing the threaded ends 62a of the two connector bodies 62 into the two threaded front holes 26, obtained at the prominence 24a of the projecting portion 24 of the compartment 20;
H) overlapping the seal 30 to the compartment 10;
I) coupling
   a. of the two compartments 10, 20, by engaging the protrusions 10^{I}, 10^{II}, 10^{III}, 10^{IV} in the recesses 20^{I}, 20^{II}, 20^{III}, 20^{IV}, and at the same time
   b. of the free ends 50a, 52a of the terminals 50, 52, passed through the threaded front holes 26 of the compartment 20, to the threaded ends of the two previously screwed connector bodies 62;
L) fastening the compartment 10, the interposed seal 30 and the compartment 20, by the fixing means 40, at the respective holes 12, 32 e 22, and clamping by corresponding sealing means 40;
M) hermetic sealing of the connectors 60 with the free ends 50a, 52a of the terminals 50, 52 by
   a. insertion of the sealing rings 66a, in direct contact with the respective connectors 50, 52,
   b. insertion of the cutting ring 66b,
N) locking the threaded ends 62b of the connector body 62 with the respective nuts 68.

The closure of cell 100 by conventional fixing and sealing means 40, such as screws, washers and nuts, and by threaded connectors 60 allows the components of cell 100 to be re-used once the plates P have completed their life cycle. Indeed, by opening the two compartments 10, 20 it will be possible to remove the block of plates P, as described above in assembly step E), and replace it with a new one to be arranged inside cell 100.

As previously discussed, the upper threaded hole 16 of compartment 10 is provided to perform the filling activities of cell 100. After its assembly, this cavity will be closed with a conventional recombination cap (not shown), which is usual in *automotive* AGM batteries in production.

Said cap has two sealing points and a relief valve for the release of gases when they achieve an over-pressure (between 0.07-0.21 kPa) inside cell; the relief valve, by lifting slightly, allows the release of formed gases, helping them to be released from the inside of cell 100, through the front hole 18 of compartment 10.

The sealing between the valve and cell 100 does not occur at the same time at both points but is done differentially, at one point under standard conditions and at the other point under over-pressure conditions when the valve lifts.

### Design validation

Two pressure tests have been carried out to evaluate the tightness of cell 100,
the first one, operating under overpressure conditions, and
the second one, bringing cell into vacuum conditions.

### FIRST TEST: Over-pressure test

The cell 100 was connected to an over-pressure apparatus, through a specific cap, which has a nozzle, and which allows cell 100 to be sent under pressure through the insertion of a certain amount of air. Specifically, it was flushed to an internal pressure of the cell (*pᵢ*) between 300 and 380 mbar (value established by the operator). This value was reached in about two minutes, after which one minute was set to pass to stabilize the system.

After this time, within two minutes, the final pressure value (*p_{f}*) was measured.

The difference between the two recorded values provided the pressure leakage (considered acceptable up to 10 mbar).

The pressure leakage during the test was 4 mbar which is less than the value required for validation of cell 100.

### SECOND TEST: Vacuum test

The vacuum test is very similar to the previous one.

The vacuum value is reported as negative because it is measured with a manometer in which the atmospheric pressure (p=1 bar) corresponds to the zero value.

A cap with a nozzle was placed on the cell 100 so that the vacuum pump could be connected.

For this test, the vacuum level was set to approx. -0.98 bar (*pᵢ*); Once the pressure manometer reached the set value, the machinery was turned off and a time of about sixty seconds was set to pass to equilibrate the system.

Two minutes after the end of stabilization, the pressure reached (pf) is recorded.

This test is mainly qualitative, since there are no reference values in the literature as well, but a vacuum leakage of about 2% (0.02 bar) can be considered acceptable.

The recorded vacuum leakage was about 0.01 bar and, therefore, acceptable.

A method for measuring recombination and water leakage by gas analysis of the cell 100 lead-acid battery for laboratory activities of the invention is described herein.

### Gas analysis

The temperature at which the gas analysis is carried out is monitored by using a thermocouple; inserted into the cell 100 through a sealed hole (not shown), to prevent gas leakage, from inside to outside and vice versa, made on compartment 10, near top hole 16.

The thermocouple is then connected to a temperature detector. The method consists of putting the cell 100 in a thermostat bath with a temperature set at 60°C. During the increase in the internal temperature of the cell 100, chronopotentiometry (an electroanalytical technique for measuring, as a function of time, the potential flowing through an electrode) is performed with an imposed current of 50 mA in order to promote the gas formation at the electrodes (oxygen at the positive electrode and hydrogen at the negative electrodes), thus bringing the cell 100 to an over-pressure condition.

The internal pressure variation of the cell 100 is monitored using a pressure manometer (not shown) of the tubular (or Bourdon) spring type made of stainless steel (316L). The pressure manometer is inserted and screwed onto a GAS or NPT threaded hole (not shown) obtained on the compartment 10, near the upper hole 16 and in communication with the central cavity 14.

Hermetically inserted to avoid even minimal gas leakage, the pressure manometer is preferably placed opposite the thermocouple to ensure the structural and mechanical sealing integrity of the cell 100. Measuring corresponds to the pressure change of the cell 100, hermeticity being guaranteed by the remaining components. When the internal pressure of the cell 100 reaches a value near 0.5-0.6 bar, gas is withdrawn from the upper hole 16 of compartment 10, specifically plugged with an elastomeric septum, e.g., silicone (not shown), suitable for syringe withdrawal, until the internal pressure reaches 0.2 bar (upper limit sealing pressure of the check valve fitted in commercial batteries).

The withdrawn gas is, in the first place, used to purge the syringe. The operation is, then, repeated: this time the withdrawn gas is injected into a gas-chromatograph to determine its composition. Gas withdrawals are made continuously, maintaining an imposed current of 50 mA to achieve continuous gas formation, which, when the volume is reached, is then injected into the gas-chromatograph as previously described.

Gas injection is performed until constant values are obtained in the composition of the injected gas, which represents a pseudo baseline as a reference.

At this stage, the cell 100 is returned to open-circuit potential (OCP) and chronopotentiometry is performed with set current values of 20 mA, 50 mA and 100 mA, recording cell potential associated with each current as soon as it becomes stable. Application of these currents brings the cell 100 to an overpressure condition as previously described. When the internal pressure reaches a value of 0.2 bar, monitoring of the time through stopwatch taken by the cell 100 to reach a value close to 0.5 bar is started.

As soon as the pressure reaches that value, current application and time monitoring are stopped. Using the syringe, a volume of gas is withdrawn such that the pressure of the cell 100 is restored to 0.2 bar.

Though the invention has been described above with reference to one possible embodiment thereof, given for illustrative and non-limiting purposes, numerous modifications and variations will appear obvious to a person skilled in the art considering the above description. The present invention, therefore, is intended to cover all modifications and variations within the protected field of the following claims.

## Claims

1. A lead-acid battery cell (100) with AGM technology for laboratory activities, comprising:
- plates (P), flat for *automotive* and industrial applications, obtained by grid manufacturing technologies such as gravity fusion, continuous fusion, expanded and punched: positive (P+) and negative (P-);
- fiberglass separators (M), wrapped around the positive (P+) plates;
- electrolytic solution,
**characterized by** being assemblable and re-usable, being formed by
- two thermoplastic material compartments (10, 20) for housing the plates (P);
- a rubber seal (30), interposed between said compartments (10, 20);
- conventional fixing and sealing means (40);
- terminals (50, 52), of fused Pb-Sn alloy, welded to the group of plates (P) and having free threaded ends (50a, 52a), respectively;
- thermoplastic material connectors (60),
and **characterized by** providing a precision pressure manometer for pressure monitoring and a rubber (elastomer) septum for gas capture and analysis.

2. The cell (100) according to claim 1, **characterised in that:**
- the plates (P) are rectangular and flag-types, having a protrusion between 93-141 mm, width between 74-150 mm and thickness between 0.85-1.7 mm, and being at least two negative (P-) and at least one positive (P+);
- the separator (M) has such a thickness as to create a compression applied homogeneously on the entire surface of the plates (P);
- the two compartments (10, 20) are rectangular in shape, the compartment (10) having:
- perimeter-distributed holes (12);
- a central cavity (14), for housing the plates (P), which is rectangular and has variable dimensions depending on the size (height, width and thickness) of the plates (P);
- an upper threaded hole (16), of the M18 type, suitable for filling the cell (100) and adapted to accommodate a conventional battery cap;
- a front hole (18) for gas relief;
- protrusions (10^{I}, 10^{II}, 10^{III}, 10^{IV}) at the four vertices;
the compartment (20) having:
- perimeter-distributed holes (22);
- a protruding portion (24), for housing the plates (P), which is rectangular and has variable dimensions depending on the size (height, width and thickness) of the plates (P);
- a prominence (24a), in said protruding portion (24);
- two front threaded holes (26) of the G1/8" type, in the prominence (24a);
- recesses (20^{I}, 20^{II}, 20^{III}, 20^{IV}) at the four vertices;
- the seal (30) is rectangular in shape, having:
- perimeter-distributed holes (32);
- a central through cavity (34) of rectangular shape;
- absence of the four vertices;
- the fixing means (40) find access from the back face (100a) of the cell (100), at the holes (12) of the compartment (10), pass through the holes (32) of the seal (30) and the holes (22) of the compartment (20), and they are clamped, by corresponding sealing means (40), at the opposite end, on the front face (100b) of the cell (100);
- the terminals (50, 52) have round profiles with a length of 70 mm, a diameter of 6 mm, and an M6 thread with a length of about 15-20 mm, of which
- the unthreaded ends are welded to the flags of one of the at least two negative (P-) plates and the at least one positive (P+) plate;
- the opposite free threaded ends (50a, 52a) emerge from the front face (100b) of the cell (100), through the front holes (26) of the compartment (20);
- the connectors (60) comprise:
- a connector body (62), with opposing threaded ends (62a, 62b) having a size proportional to the flag of the plates (P) and known type threads (G, M or NPT);
- a rubber seal (64), housed at said threaded end (62a);
- a sealing ring (66a);
- a cutting ring (66b);
- a locking nut (68).

3. The cell (100) according to claim 2, **characterised in that** the holes (12) of the compartment (10), the holes (22) of the compartment (20) and the holes (32) of the interposed seal (30) are aligned with each other.

4. The cell (100) according to claim 2, **characterised in that** the central cavity (14) of the compartment (10) is complementary to the protruding portion (24) of the compartment (20) and to the central through cavity (34) of the interposed seal (30).

5. The cell (100) according to claim 2, **characterised in that** the protrusions (10^{I}, 10^{II}, 10^{III}, 10^{IV}) of the compartment (10) engage with the recesses (20^{I}, 20^{II}, 20^{III}, 20^{IV}) at the four vertices of the compartment (20).

6. The cell (100) according to claim 2, **characterised in that the** rubber seal (64) is located between the cell (100) and the connectors (60), proximal to the front holes (26) of the compartment (20), to ensure the good seal between the cell (100) and the connectors (60).

7. The cell (100) according to claim 2, **characterized by** the following assembly steps:
A) drilling of the flags of the plates (P) for the passage of the two terminals (50, 52);
B) a first welding between the unthreaded end of the first terminal (50) and the flag of the first of the at least two negative (P-) plates;
C) a second welding between the unthreaded end of the second terminal (52) and the flag of the at least one positive (P+) plate;
D) wrapping of the at least one positive (P+) plate in the separator (M) and coupling the same with the first of the at least two negative (P-) plates;
E) overlapping the second of the at least two negative (P-) plates on top of the just-formed group and welding it to the first terminal (50) to obtain a block of plates (P) consisting of at least two negative (P-) plates and at least one positive (P+) plate;
F) positioning the block of plates (P) inside the central cavity (14) of the compartment (10), with the free ends (50a, 52a) of the terminals facing upwards;
G) screwing the threaded ends (62a) of the connector body (62) into the threaded front holes (26) of the compartment (20);
H) overlapping the seal (30) to the compartment (10);
I) coupling
a. of the two compartments (10, 20), by engaging the protrusions (10^{I}, 10^{II}, 10^{III}, 10^{IV}) in the recesses (20^{I}, 20^{II}, 20^{III}, 20^{IV}), and at the same time
b. of the free ends (50a, 52a) of the terminals (50, 52), passed through the threaded front holes (26) of the compartment (20), to the threaded ends (62a) of the previously screwed connector body (62);
L) fastening the compartment (10), the interposed seal (30), and the compartment (20), by fixing means (40), at the respective holes (12), (32), and (22), and clamping by corresponding sealing means (40);
M) hermetic sealing of the connectors (60) with the free ends (50a, 52a) of the terminals (50, 52) by
a. insertion of the sealing rings (66a), in direct contact with the respective connectors (50, 52),
b. insertion of the cutting ring (66b),
N) locking the threaded ends (62b) of the connector body (62) with the respective nuts (68).

8. The cell (100) according to claim 7, **wherein** the clamping of the means (40), which is performed with a dynamometric tool with varying torque, depending on the material chosen for the compartments and the seal, is performed with the same force.

9. The cell (100) according to the previous claims, **wherein,** once the plates (P) have completed their life cycle, the compartments (10, 20) are opened, and the block of plates (P) is removed for its re-placement and re-use of the cell (100) components.

10. The cell (100) according to claim 2, provided with a conventional *automotive* AGM battery recombination cap to be inserted into the upper hole (16) of the compartment (10), after the cell (100) assembly, said cap being **characterized by** two sealing points and a relief valve for the release of gases when they achieve an overpressure inside the cell (100), said relief valve lifting slightly and helping the release of gases through the front hole (18) of the compartment (10).

11. The cell (100) according to claim 2, **characterized by** having two opposing sealed holes bored on the compartment (10) near the upper hole (16), one hole being adapted for the insertion of a thermocouple for temperature detection and the other hole being adapted for the insertion of the precision pressure manometer for pressure monitoring.

12. A method for measuring recombination and water loss by gas analysis of lead-acid battery cell (100) for laboratory activities according to the preceding claims, **characterized by** the following steps:
A) monitoring the temperature at which the gas analysis is carried out by using a thermocouple, connected to a temperature detector;
B) putting the cell (100) in a thermostat bath, with a temperature set at 60°C;
C) chronopotentiometry with a current of 50 mA to promote gas formation at the electrodes and bring the cell (100) to an overpressure condition;
D) measuring the change in internal cell pressure (100) by using the pressure manometer;
E) at the internal pressure of the cell (100) equal to a value close to 0.5-0.6 bar, syringe withdrawal of gas through the elastomeric septum arranged to cap the upper hole (16) of the compartment (10);
F) syringe withdrawal until internal cell pressure (100) is reestablished at 0.2 bar;
G) injection of the gas drawn into a gas-chromatograph in order to determine its composition;
H) continuous repetition of steps C) to G) until constant values in the composition of the injected gas are obtained and a baseline is drawn as a reference;
I) recovery of the open circuit potential (OCP) of the cell (100);
J) chronopotentiometries with set current values of 20 mA, 50 mA and 100 mA, to record the cell (100) potential associated with each current as soon as it becomes stable;
K) when the internal pressure achieves a value of 0.2 bar, monitoring the time through stopwatch required by the cell (100) to reach a value close to 0.5 bar;
L) interruption of current application and time monitoring;
M) syringe withdrawal of a volume of gas such that the pressure of the cell (100) is restored to 0.2 bar.
